# EUROPEAN PATENT APPLICATION

(11) **EP 2 354 571 A2**
(43) Date of publication of application: **10.08.2011**
(21) Application number: 11153215.6
(22) Date of filing: 03.02.2011
(51) Int. Cl.: F16B 21/16, F16H 63/32

(54) **Fastening device for fastening, in relation to a shaft, a fastening lug through which the shaft is intended to run**

(30) Priority: 08.02.2010 SE 1050122
(71) Applicant: Scania CV AB, 151 87 Södertälje (SE)
(72) Inventor: Lundin, Jonas, 141 59, Huddinge (SE)

(57) **Abstract**

Fastening device for fastening, in relation to a shaft, an element comprising a fastening lug (10, 310) through which the shaft is intended to run, which device comprises a locking configuration for mutually locking the shaft (40; 140; 240; 340) relative to the fastening lug (10; 310) in the axial direction, comprising locking elements (30, 31, 33, 42a, 42b, 44, 50, 60; 142, 162, 166; 242, 244, 262, 266; 322, 328, 342, 344, 360) adapted, in a first mutual rotation state of the shaft (40; 140; 240; 340) and the fastening lug, to being put into an engagement state by a first axial mutual movement of the shaft (40; 140; 240; 340) and the fastening lug, and to be being put into a locking state after a locking operation which involves a second axial mutual movement and a mutual rotation of the shaft (40; 140; 240; 340) and the fastening lug. The invention relates also to a motor vehicle.

## Description

### TECHNICAL FIELD

The invention relates to a fastening device according to the preamble of claim 1. The invention relates also to a motor vehicle according to claim 10.

### BACKGROUND

Motor vehicles are equipped with selector fork configurations for various gear steps, each selector fork configuration comprising a selector fork which has a selector shaft fitted to it. The selector fork configuration is appropriate for manual and automatic gearboxes.

The selector fork has a substantially circular cylindrical axially hollow upper portion in which the selector fork is intended to be inserted during assembly of the selector fork configuration. During assembly, a spiral pin is pressed transversely through radial holes in the circular cylindrical portion and in the selector shaft inserted in the circular cylindrical portion for mutual axial and radial locking. The selector shaft and the selector fork are pre-assembled with a plastic sleeve in which the spiral pin is intended to be situated, and are thereafter placed in a hydraulic press by means of which a spiral pin is pressed through the circular cylindrical portion of the selector fork and the selector shaft.

Pressing of spiral pins as above involves a problem. When the selector shaft and the selector fork are pre-assembled, setting up in the hydraulic press requires a relatively large degree of accuracy. Large press forces result in risk of the selector shaft being bent when the spiral pin is being pressed down. A bent selector shaft leads to it jamming in the gearbox and probably having to be scrapped along with the selector fork and the spiral pin.

A further problem in pressing of spiral pins is that the pin may not go down properly but become stuck. Either the selector fork configuration has to be scrapped or further press force has to be applied in another attempt to press the spiral pin down, further increasing the risk of bending the selector fork.

It is also desirable, inter alia for space and weight reasons, to reduce the thickness of the selector shaft, in which case the radial hole in the shaft cannot be made as large, with the result that a smaller spiral pin has to be used, leading to impaired strength/locking.

### OBJECTS OF THE INVENTION

An object of the present invention is to propose a fastening device for fastening, in relation to a shaft, an element comprising a fastening lug through which the shaft is intended to run, which device reduces scrapping during assembly.

A further object of the present invention is to propose a fastening device which is intended for selector fork configurations and which comprises a selector shaft and a selector fork comprising a fastening lug through which the shaft is intended to run, which device reduces scrapping during assembly of selector fork configurations for motor vehicles while maintaining mutual locking between the selector shaft and the selector fork of the selector fork configuration.

### SUMMARY OF THE INVENTION

These and other objects indicated by the description set out below are achieved by means of a fastening device and a motor vehicle which further exhibit features indicated in the characterising part of the attached respective independent claims 1 and 10. Preferred embodiments of the fastening device are defined in the attached respective dependent claims 2-9.

According to the invention the above objects are achieved with a fastening device for fastening, in relation to a shaft, an element comprising a fastening lug through which the shaft is intended to run, which device comprises a locking configuration for mutually locking the shaft relative to the fastening lug in the axial direction, comprising locking elements which are adapted, in a first mutual rotation state of the shaft and the fastening lug, to being put into an engagement state by a first axial mutual movement of the shaft and the fastening lug, and to be being put into a locking state after a locking operation which involves a second axial mutual movement and a mutual rotation of the shaft and the fastening lug.

The result is mutual axial locking without need for press force on the shaft, substantially eliminating the risk of damage to the shaft during locking operations, and hence reducing scrapping. Nor is any permanent locking needed, thereby allowing dismantling. No transverse holes are needed in the shaft and the fastening lug, so the shaft may take the form of a hollow tube.

According to an embodiment of the fastening device, said second axial mutual movement of the shaft and the fastening lug is arranged to take place before said mutual rotation of the shaft and the fastening lug.

According to an embodiment of the fastening device, said second axial mutual movement of the shaft and the fastening lug is arranged to take place after a first mutual rotation of the shaft and the fastening lug to reach said first mutual rotation state.

According to an embodiment of the fastening device, said second mutual rotation of the shaft and the fastening lug is substantially 180 degrees, resulting in maximum load bearing surfaces.

According to an embodiment of the fastening device, said locking elements comprise axial stop elements and also recesses provided inside the fastening lug and mutually configured to make said states possible. Such locking elements are relatively easy to manufacture/process.

According to an embodiment of the fastening device, said axial stop elements are adapted to being attached to the shaft such that locking elements enclose shaft portions provided with grooves, making stable mutual locking of the shaft relative to the fastening lug possible in the axial direction.

According to an embodiment of the fastening device, at least one axial stop element is comprised of shaft portions, making it possible to reduce the number of components.

According to an embodiment of the fastening device, said locking elements incorporate at least one rotary lock associated with the fastening lug for mutual locking of the shaft relative to the fastening lug in rotary directions, thus locking the shaft in both axial and rotary directions.

According to an embodiment of the fastening device, said elements of a selector fork and said shaft take the form of selector shafts for selector fork configurations. This reduces scrapping during assembly of selector fork configurations for motor vehicles, while maintaining mutual locking between the selector shaft and the selector fork of the selector fork configuration. There may also be no need for any spiral pin, which means that the selector shaft can be made narrower while maintaining mutual locking. No hydraulic press is needed to achieve mutual locking of the selector shaft relative to the selector shaft holder of the selector fork. No transverse holes are needed in the selector shaft and the selector shaft holder.

### DESCRIPTION OF THE DRAWINGS

The present invention will be better understood with reference to the detailed description set out below, read in conjunction with the attached drawings, in which the same reference notations pertain to similar parts throughout the various views, and in which:
Fig. 1 depicts schematically a selector fork for a motor vehicle according to a first embodiment of the present invention;
Fig. 2a depicts schematically a lateral cross-section of a selector shaft holder according to a first embodiment, disposed in the upper portion of the selector fork in Fig. 1;
Fig. 2b depicts schematically a plan cross-section of the selector shaft holder in Fig. 1;
Figs. 3a and 3b depict schematically front perspective views of the selector shaft holder in Fig. 1;
Fig. 3c depicts schematically a rear perspective view of the selector shaft holder in Fig. 1;
Fig. 4a depicts schematically a front view of the selector shaft holder in Fig. 1;
Fig. 4b depicts schematically a rear view of the selector shaft holder in Fig. 1;
Fig. 5a depicts schematically a perspective view of a selector shaft intended to be accommodated in the selector shaft holder in Fig. 1, according to a first embodiment of the present invention;
Fig. 5b depicts schematically a side view of the selector shaft in Fig. 5a;
Fig. 5c depicts schematically a view from above of the selector shaft in Fig. 5a;
Figs. 6a and 6b depict schematically perspective views of a low axial stop element according to a first embodiment of the present invention;
Fig. 6c depicts schematically a front view of the low axial stop element in
Figs. 6a and 6b;

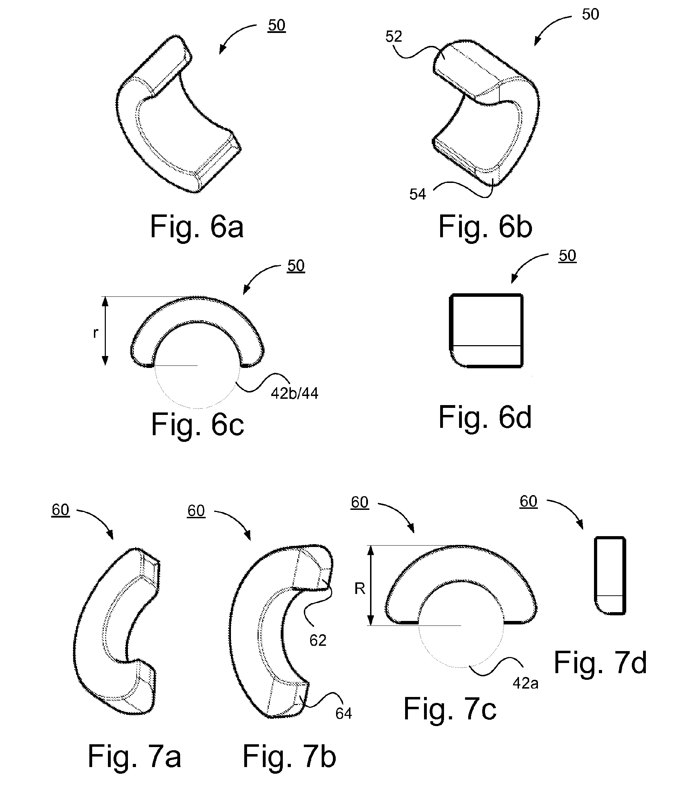

Fig. 6d depicts schematically a side view of the low axial stop element in
Figs. 6a and 6b;
Figs. 7a and 7b depict schematically perspective views of a high axial stop element according to a first embodiment of the present invention;
Fig. 7c depicts schematically a front view of the high axial stop element in
Figs. 7a and 7b;
Fig. 7d depicts schematically a side view of the high axial stop element in
Figs. 7a and 7b;

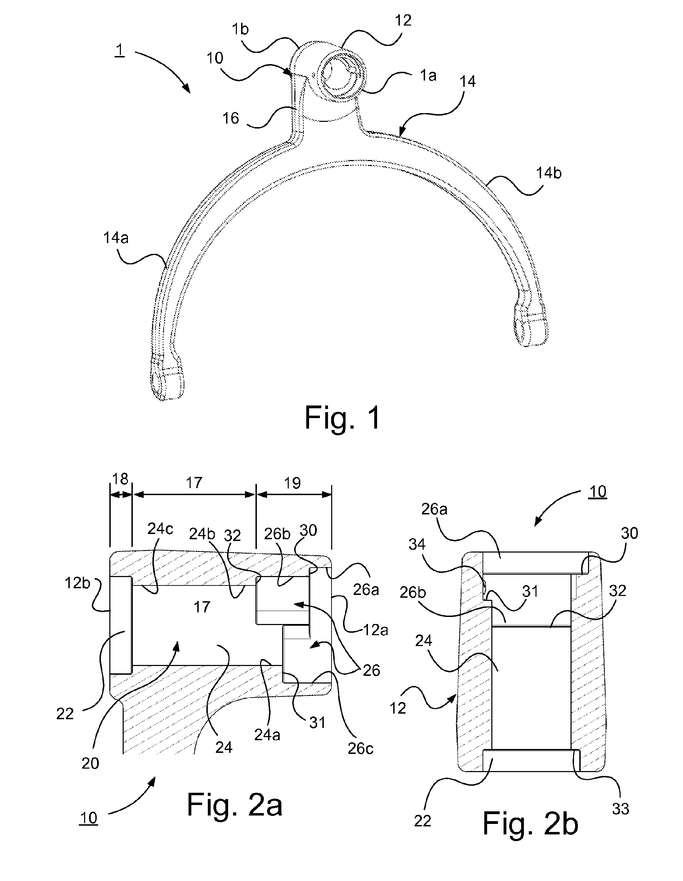

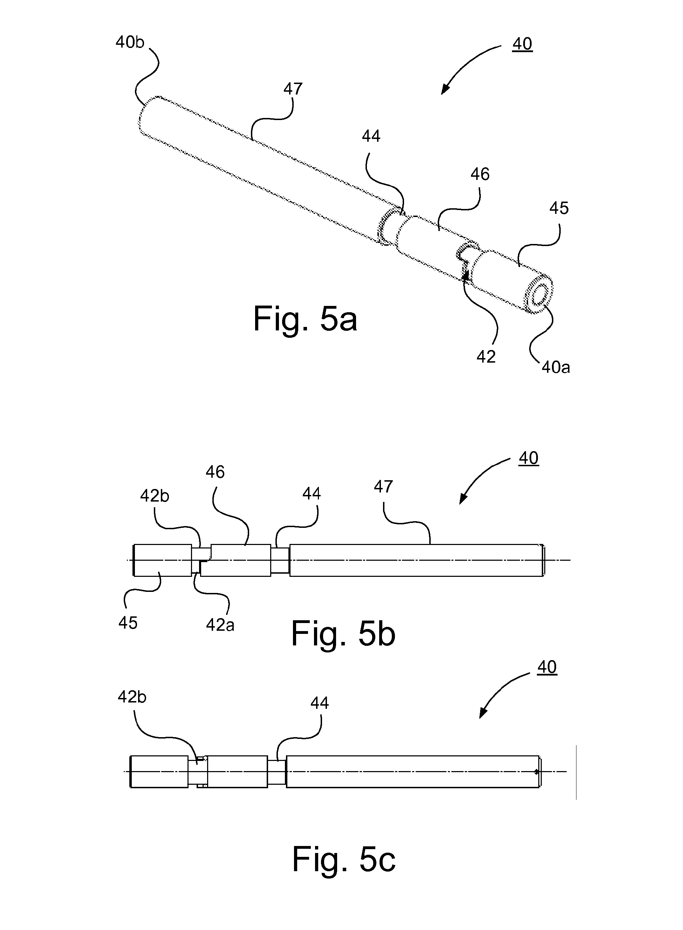

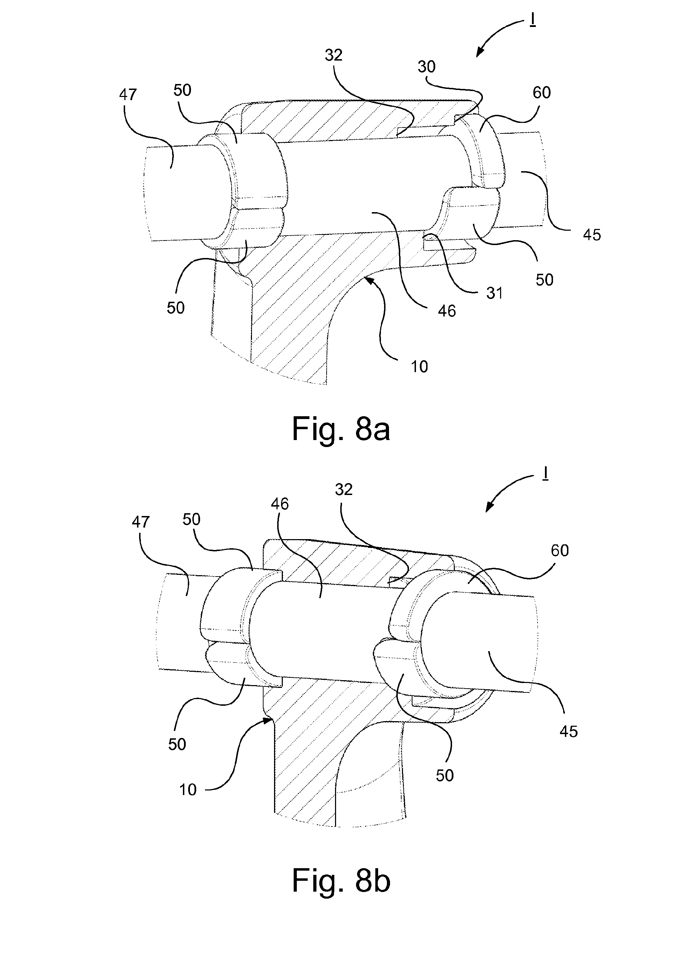

Fig. 8a depicts schematically a partly cutaway perspective view, as seen obliquely from the rear, of a portion of a selector fork configuration according to a first embodiment of the present invention, comprising the selector shaft holder according to Fig. 1, the selector shaft according to Figs. 5a-c and axial stop elements according to Figs. 6a-d and 7d;
Fig. 8b depicts schematically the portion of the selector fork configuration in
Fig. 8a in a partly cutaway perspective view, as seen obliquely from in front;

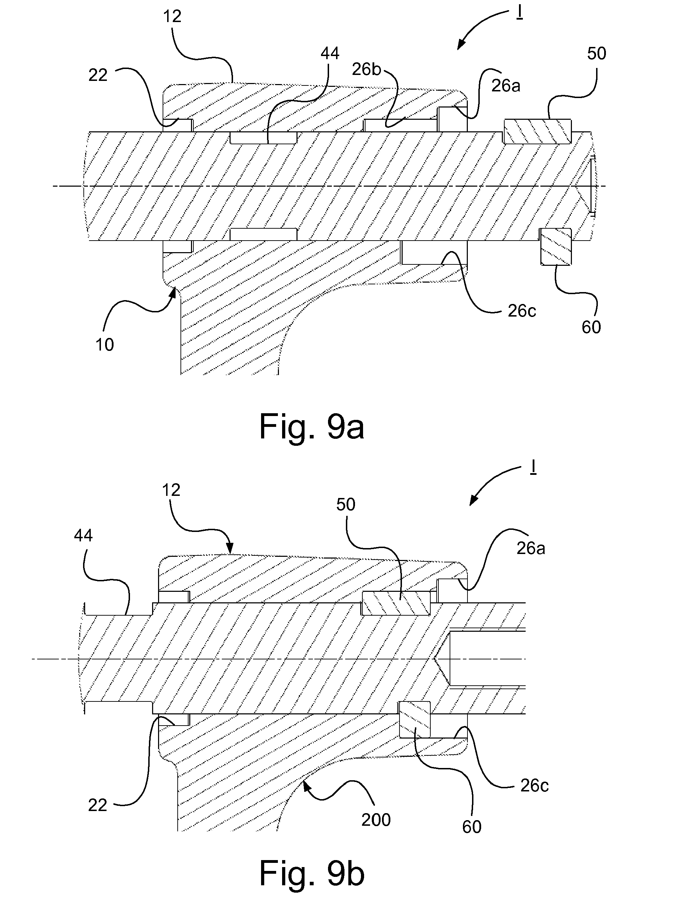

Figs. 9a-e depict schematically lateral cross-sectional views of the selector shaft holder according to Fig. 1, the selector shaft according to Figs. 5a-c and axial stop elements according to Figs. 6a-d and 7a-d at various stages of an assembly procedure for constructing the selector fork configuration according to the first embodiment;

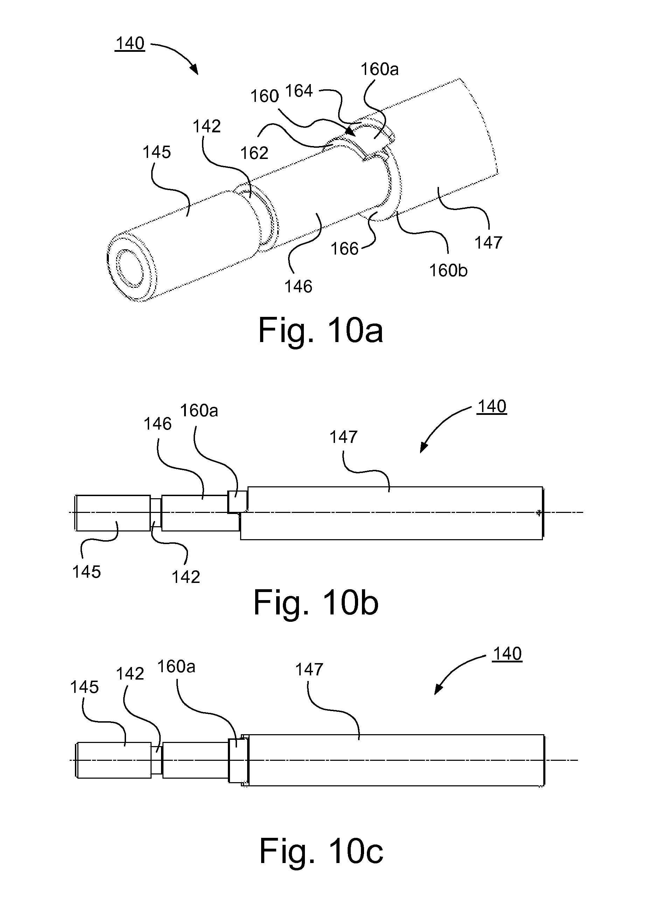

Fig. 10a depicts schematically a perspective view of a selector shaft according to a second embodiment of the present invention;
Fig. 10b depicts schematically a side view of the selector shaft in Fig. 10a;
Fig. 10c depicts schematically a view from above of the selector shaft in Fig. 10a;

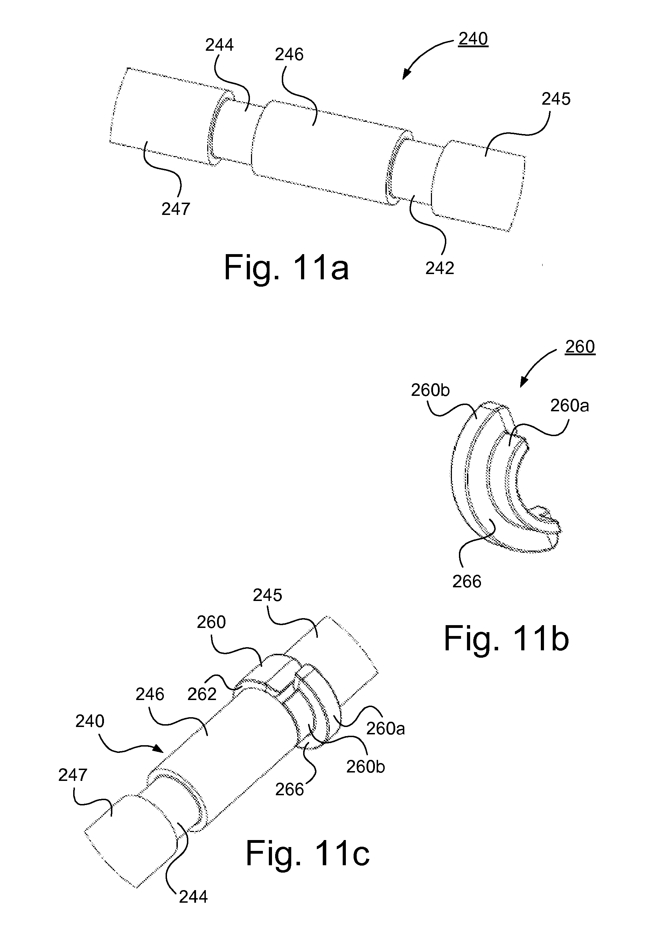

Fig. 11 a depicts schematically a perspective view of a selector shaft intended to be accommodated in the selector shaft holder in Fig. 1, according to a third embodiment of the present invention;
Fig. 11b depicts schematically a perspective view of a high axial stop element according to a second embodiment of the present invention;
Fig. 11c depicts schematically a perspective view of the selector shaft in Fig. 11 a provided with the axial stop element in Fig. 11b;

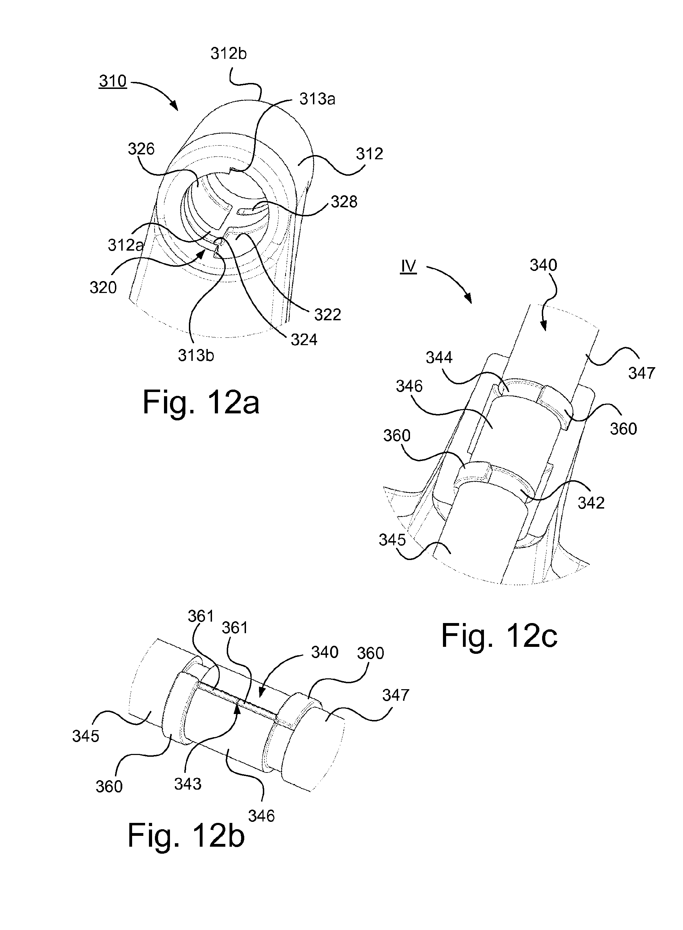

Fig. 12a depicts schematically a perspective view of a selector shaft holder according to a fourth embodiment, disposed in the upper portion of a selector fork;
Fig. 12b depicts schematically a perspective view of a selector shaft provided with axial stop elements and intended to be accommodated in the selector shaft holder in Fig. 12a according to a fourth embodiment of the present invention; and
Fig. 12c depicts schematically a partly cutaway perspective view, as seen obliquely from above, of a portion of a selector fork configuration according to a fourth embodiment of the present invention, comprising the selector shaft holder according to Fig. 12a and the selector shaft provided with axial stop elements according to Fig. 12b.

### DETAILED DESCRIPTION OF THE INVENTION

Fig. 1 depicts schematically a selector fork 1 for a motor vehicle according to a first embodiment of the present invention.

The selector fork 1 has a selector shaft holder 10 disposed in the upper portion. The selector shaft holder 10 takes the form of a fastening lug through which a selector shaft is arranged to run. The selector shaft holder 10 comprises a hub portion 12 which has running through it an aperture to accommodate the selector shaft, the selector shaft being arranged to run through said aperture. The hub portion 12 has a substantially circular cylindrical shape and is intended to extend axially in the direction of the vehicle. The selector shaft holder has a forward side 1 a and a rear side 1 b and the hub portion 12 has a forward aperture 12a and a rear aperture 12b so that the aperture extends axially continuously from the rear aperture 12b to the forward aperture 12a of the hub portion 12, forming an enclosed continuous duct configuration 20 incorporating recesses.

The internal surface of the continuous duct configuration 20 is configured to accommodate and axially lock a selector shaft according to Figs. 5a-c relative to the selector shaft holder 10 by means of locking elements of the selector shaft.

The selector fork 1 comprises a fork portion 14 which is connected to the selector shaft holder 10, provided with an arcuate configuration in the form of an inverted U and associated with the selector shaft holder 10. The selector shaft holder 10 has in its lower rear portion a neck 16 extending downwards to join the fork portion 14 which extends arcuately out from the neck by respective arms 14a, 14b.

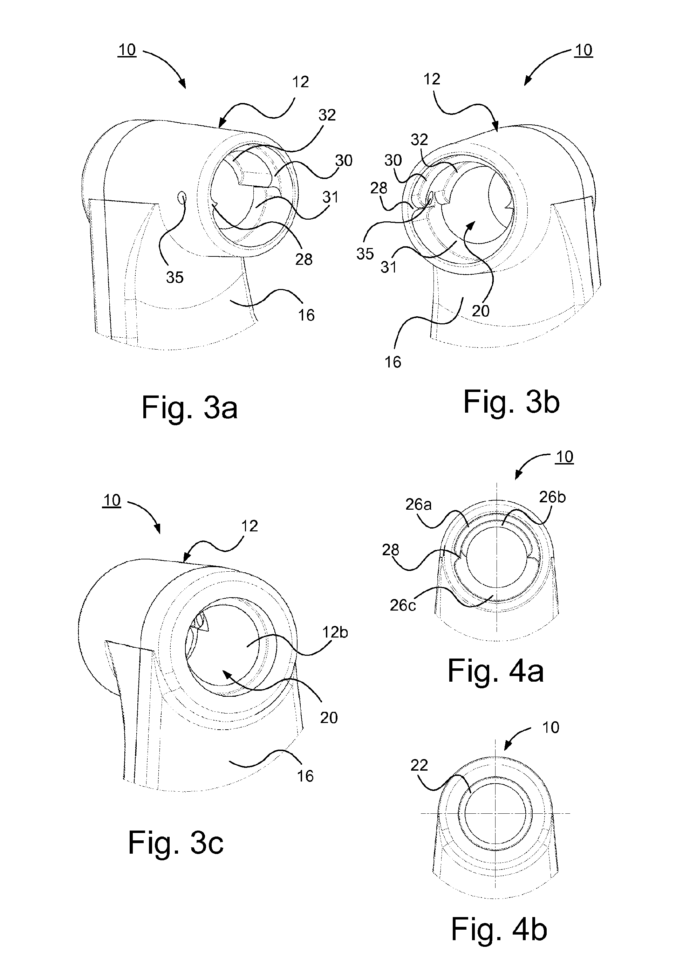

Fig. 2a depicts schematically a lateral cross-section of the selector shaft holder 10 of the selector fork in Fig. 1 according to a first embodiment, Fig. 2b a plan cross-section, Figs. 3a and 3b front perspective views, Fig. 3c a rear perspective view, Fig. 4a a front view and Fig. 4b a rear view of the selector shaft holder 10 in Fig. 1.

The hub portion 12 has a central portion 17 extending between a rear portion 18 and a forward portion 19. The central portion 17 of the hub portion 12 has from the rear portion 18 of the hub portion 12 to a subportion of the forward portion 19 a substantially circular cross-section with an inside diameter substantially corresponding to the outside diameter of the selector shaft depicted in Figs. 5a-c. The continuous duct configuration 20 consequently has a central duct portion 24.

The rear portion 18 of the hub portion 12 has a substantially circular cross-section with an inside parameter which is larger than the inside diameter of the cross-section of the central portion 17 of the hub portion 12. The rear portion extends from the rear aperture 12b of the continuous duct configuration 20 to the rear part of the central portion 17. The continuous duct configuration 20 consequently has a rear circular duct portion and the transition from the rear duct portion to the central duct portion 24 is via a step 22a at which the rear duct portion 22 with a larger inside diameter joins the central duct portion 24 with a smaller diameter relative to the rear duct portion. The transition, i.e. the step, between the rear duct portion 22 and the central duct portion 24 constitutes a rear stop. The rear duct portion 22 takes the form of a circular recess along the internal circumference of the continuous duct configuration 20 with an axial widening from the rear aperture 12b to the central duct portion 24.

The forward portion of the hub portion 12 extends from the forward aperture 12a of the continuous duct configuration 20 to the forward part of the central portion. The continuous duct configuration 20 has a forward duct portion 26. The forward duct portion 26 has a first upper substantially semicircular cross-section with a radius which is larger than the radius of the rear duct portion 22, such that the forward duct portion 26 has a first upper semicircular portion 26a with an axial extent which according to this embodiment substantially corresponds to the axial extent of the rear duct portion 22. The first upper semicircular portion 26a takes the form of a semicircular recess along the upper inside circumference of the continuous duct configuration 20, extending from substantially the middle of one inner side to the middle of the opposite inner side, and with an axial extent from the forward aperture 12a to a second upper semicircular portion 26b.

The forward duct portion 26 has a second substantially semicircular cross-section with a radius which is substantially the same as the radius of the rear duct portion 22 and consequently smaller than the radius of the first upper semicircular portion 26a, such that the forward duct portion 26 surrounds the second upper semicircular portion 26b with an axial extent which according to this embodiment is larger than the axial extent of the first upper semicircular portion 26a. The second upper semicircular portion 26b takes the form of a semicircular recess along the upper inner circumference of the continuous duct configuration 20, extending from substantially the middle of one inner side to the middle of the opposite inner side, and with an axial extent from the rear portion of the first upper semicircular portion 26a to an upper forward portion of the central duct portion 24.

The forward duct portion 26 has a lower substantially semicircular cross-section with a radius which is larger than the radius of the rear duct portion 22 and which corresponds to the radius of the first upper cross-section, such that the forward duct portion 26 has a lower semicircular portion 26c with an axial extent which according to this embodiment substantially corresponds to twice the axial extent of the first upper semicircular portion 26a. The lower semicircular portion 26c takes the form of a semicircular recess along the lower inner circumference of the continuous duct configuration 20, extending from substantially the middle of one inner side to the middle of the opposite inner side, and with an axial extent from the forward aperture 12a to a lower forward portion of the central duct portion 24.

The central duct portion 24 has a substantially circular cross-section from the transition from the rear duct portion 22 to the rear portion of the second upper semicircular portion 26b. The central duct portion 24 has a lower substantially circular cross-section from the level of the rear portion of the second upper semicircular portion 26b to the rear portion of the lower portion 26c of the forward duct portion 26.

The transition between the first upper semicircular portion 26a and the lower semicircular portion 26c of the forward duct portion 26 constitutes a first rotation stop 28 with a cam or ridge. Said transition takes the form of a concave bend of the first upper semicircular portion 26a and a concave bend of the lower semicircular portion 26c where they meet at the right side of the forward aperture 12a of the hub portion 12. The transition has a pointed corrugated profile such that said cam extends axially. Said transition consequently constitutes said first rotation stop 28.

The transition between the second upper semicircular portion 26b and the lower semicircular portion 26c of the forward duct portion 26 constitutes a cam or ridge. Said transition takes the form of a concave bend of the second upper semicircular portion 26b and a concave bend of the lower semicircular portion 26c where they meet at the left side of the forward aperture 12a of the hub portion 12. The transition has a pointed corrugated profile such that said cam protrudes axially.

The transition between the second upper semicircular portion 26b of the forward duct portion 26 and the lower semicircular portion 24a of the central duct portion 24 constitutes a concave ramp. Said transition takes the form of a concave bend of the second upper semicircular portion 26b which levels out where it meets the lower semicircular portion 24a of the central duct portion 24 at the left and right sides of the hub portion 12.

The transition from the first upper semicircular portion 26a of the forward duct portion 26 to the second upper semicircular portion 26b of the forward duct portion 26 is via a step where the first upper semicircular portion 26a with a larger radius joins the second upper semicircular portion 26b with a smaller radius relative to the first upper semicircular portion 26a. The transition, i.e. the step, between the first upper semicircular portion 26a and the second upper semicircular portion 26b constitutes a first upper forward stop 30.

The transition from the lower semicircular portion 26c of the forward duct portion 26 to the forward lower semicircular portion 24a of the central duct portion 24 is via a step where the lower semicircular portion 26c with a larger radius joins the lower semicircular portion 24a of the central duct portion 24 with a smaller radius relative to the lower semicircular portion 26c. The transition, i.e. the step, between the lower semicircular portion 26c and the forward lower semicircular portion 24a of the central duct portion 24 constitutes a lower forward stop 31.

The transition from the second upper semicircular portion 26b of the forward duct portion 26 to the forward upper semicircular portion 24b of the central duct portion 24 is via a step where the second upper semicircular portion 26b with a larger radius joins the forward upper semicircular portion 24b of the central duct portion 24 with a smaller radius relative to the second upper semicircular portion 26b. The transition, i.e. the step, between the second upper semicircular portion 26b and the forward upper semicircular portion 24b of the central duct portion 24 constitutes a second upper forward stop 32.

The transition from the rear duct portion 22 to the rear portion 24c of the central duct portion 24 is via a step where the rear duct portion 22 with a larger radius joins the rear portion 24c of the central duct portion 24 with a smaller radius relative to the rear duct portion 22. The transition, i.e. the step between the rear step duct portion 22 and the rear portion 24 of the central duct portion 24 constitutes a rear stop 33.

Fig. 5a depicts schematically a perspective view of a selector shaft 40 intended to be accommodated in the selector shaft holder 10 in Fig. 1 according to a first embodiment of the present invention, Fig. 5b a side view of the selector shaft 40 in Fig. 5a, and Fig. 5c a view from below of the selector shaft 40 in Fig. 5a.

The selector shaft 40 has a forward end 40a and a rear end 40b. The selector shaft 40 has a first radially encircling recess or machining at a forward portion of the selector shaft 40 at a distance from the forward end 40a. The first recess constitutes an encircling forward groove configuration 42. The encircling groove configuration has a first groove 42a which runs in the circumferential direction round substantially half of the shaft and which has a first axial extent, and a second groove 42b which runs in the circumferential direction round substantially the opposite half of the shaft and which has a second axial extent which is substantially twice as wide as the first axial extent of the first groove 42a, such that the second groove 42b constitutes a widened extension of the first groove 42a. The edge of the second groove 42b on the side nearer to the forward end 40a of the shaft runs round the selector shaft 40, is perpendicular to the axial extent and consequently has a radial extent.

The selector shaft 40 has a second radial encircling recess between and at a distance from the first recess and the rear end. The second recess constitutes an encircling rear groove configuration 44 which runs in the circumferential direction in the form of an encircling groove 44. The encircling rear groove 44 of the second recess has an axial extent corresponding to the axial extent of the second semicircular groove 42b of the first recess.

The selector shaft 40 has a forward shaft portion 45 extending axially from the forward end 40a to the forward groove configuration 42, an intermediate shaft portion 46 extending axially from the forward groove configuration 42 to the rear groove configuration 44, and a rear shaft portion 47 extending axially from the rear groove configuration 44 to the rear end 40b of the selector shaft 40. The rear shaft portion 47 is longer than the total length of the forward shaft portion 45 and the intermediate shaft portion 46 and is intended to protrude from the rear aperture 12b of the hub portion 12 of the selector shaft holder 10.

The respective grooves have a certain depth such that the depth of each groove, i.e. the first semicircular groove 42a and the second semicircular groove 42b of the first recess and the second groove 44 of the second recess.

Each groove has a bottom with a substantially axial cross-section, and opposite sidewalls disposed perpendicular to the bottom, i.e. the bottom surface of each groove is planar with vertical walls.

Figs. 6a and 6b depict schematically perspective views of a low axial stop element 50 according to a first embodiment of the present invention, Fig. 6c a front view of the low axial stop element 50 in Figs. 6a and 6b, and Fig. 6d a side view of the low axial stop element 50 in Figs. 6a and 6b.

According to an embodiment, the selector fork configuration according to the present invention comprises three low axial stop elements 50 according to Figs. 6a-d.

The low axial stop element 50 has a semicircular sleeve configuration with a radial extent and an axial extent. One low axial stop element 50 is intended to be placed in the second groove 42b of the first recess of the selector shaft 40. Two low axial stop elements 50 are intended to be placed opposite one another in the encircling rear groove 44 of the second recess of the selector shaft 40.

The low axial stop element 50 consequently has an inside radius substantially corresponding to the outside radius of the second groove 42b of the first recess and the outside radius of the encircling rear groove 44 of the second recess. The low axial stop element 50 further has an axial extent substantially corresponding to the width of the second groove 42b of the first recess and the width of the encircling rear groove 44 of the second recess. The low axial stop element 50 has a thickness substantially corresponding to twice the depth of the second groove 42b of the first recess and twice the depth of the encircling rear groove 44 of the second recess. The low axial stop element 50 has an outside radius r.

Each end 52, 54 of the low axial stop element 50 has a narrowing.

Figs. 7a and 7b depict schematically perspective views of a high axial stop element 60 according to a first embodiment of the present invention, Fig. 7c a front view of the high axial stop element 60 in Figs. 7a and 7b, and Fig. 7d a side view of the high axial stop element 60 in Figs. 7a and 7b.

The high axial stop element 60 has a semicircular sleeve configuration with a radial extent and an axial extent. The high axial stop element 60 is intended to be placed in the first groove 42a of the first recess of the selector shaft 40. The high axial stop element 60 consequently has an inside radius substantially corresponding to the outside radius of the first groove 42a of the first recess. The high axial stop element 60 further has an axial extent substantially corresponding to the width of the first groove 42a of the first recess.

The high axial stop element 60 has a thickness substantially corresponding to three times the depth of the first semicircular groove 42a of the first recess. The high axial stop element 60 has a thickness substantially 50% thicker than the low axial stop element 50. The high axial stop element 60 has an outside radius R which is larger than the outside radius r of the low axial stop element 50.

Each end 62, 64 of the high axial stop element 60 has a narrowing appropriate to the recesses in the selector shaft holder.

One end of the high axial stop element 60 is intended to abut against the first rotation stop 28 of the continuous duct configuration 20 of the selector shaft holder 10 so that rotation clockwise as seen from in front is prevented.

Fig. 8a depicts schematically a partly cutaway perspective view, as seen obliquely from the rear, of a portion of a selector fork configuration I according to a first embodiment of the present invention, comprising the selector shaft holder 10 according to Fig. 1, the selector shaft 40 according to

Figs. 5a-c and axial stop elements 50, 60 according to Figs. 6a-d and 7a-d, and Fig. 8b the portion of the selector fork configuration I in Fig. 8a in a partly cutaway perspective view as seen obliquely from in front.

Figs. 8a and 8b depict the selector fork configuration in a locking state such that two low axial stop elements 50 are placed in the encircling rear groove 44 of the second recess of the selector shaft 40 so that they each substantially surround the rear groove 44, the respective ends 52, 54 of a low axial stop element 50 being adjacent to the respective ends 52, 54 of another low axial stop element.

In addition, the high axial stop element 60 is placed in the first groove 42a of the first recess and a low axial stop element 50 is placed in the second groove 42b of the first recess of the selector shaft 40 so that they substantially surround the groove 42b, the respective ends 62, 64 of the high axial stop element 60 being adjacent to the respective ends 52, 54 of the low axial stop element 50.

The selector shaft 40 with said axial stop elements 50, 60 in place is accommodated in the locking state in the selector shaft holder 10 of the selector fork so that a rearward-facing upper surface of the high axial stop element stop 60 abuts against the first upper semicircular portion 26a of the forward duct portion 26. In addition, a rearward-facing surface of the low axial stop element 50 is placed in the second groove 42b of the first recess of the selector shaft 40 against a portion nearest to the shaft of the rearward-facing surface of the lower semicircular portion 26c of the forward duct portion 26. A space is thus formed between the external surface of the low axial stop element 50 placed in the second groove 42b and the inner surface of the lower semicircular portion of the forward duct portion 26.

The high axial stop element 60 placed in the first groove 42a and the low axial stop element 50 placed in the second groove 42b of the first recess in the selector shaft 40 thus prevent the selector shaft 40 from moving axially rearwards relative to the selector shaft holder 10.

The selector shaft 40 with said axial stop elements 50, 60 in place is further accommodated in the locking state in the selector shaft holder 10 of the selector fork 1 so that a forward-facing surface of an upper low axial stop element 50 and a forward-facing surface of a lower low axial stop element 50 abut against the internal surface and the rear-facing surface of the rear duct portion 22.

The low axial stop elements placed in the encircling rear groove 44 of the second recess of the selector shaft 40 therefore prevent the selector shaft 40 from moving axially forwards relative to the selector shaft holder 10.

The two low axial stop elements 50 abutting against the rear duct portion 22 protrude axially from the rear duct portion 22 so that a portion of the axial stop elements 50 protrudes beyond the rear portion of the selector shaft holder 10. Alternatively, these two low axial stop elements 50 might have an axial extent such that they do not protrude relative to the rear portion of the selector shaft holder 10 but reach only the same level, resulting in an aesthetically more acceptable appearance. Moreover, the two rear low axial stop elements placed in the groove need not have narrowing edges but might have sharp edges, although this would entail manufacturing a further form of axial stop element. The shape of the recesses in the rear duct portion is achieved by milling machining such that narrowing of high and low axial stop elements disposed in the rear duct portion is appropriate to said shape in order to fit and at the same time jointly prevent rotation.

The advantage of all the low axial stop elements 50 being of the same shape is that the number of different axial stop elements 50 is reduced to two, thereby simplifying manufacture and hence reducing manufacturing costs. The axial stop elements 50, 60, the first and second recesses in the selector shaft 40, the first upper portion 26a and lower portion 26c of the forward duct portion 26 and the rear duct portion 22 consequently constitute locking elements for mutual axial locking of the selector shaft 40 relative to the selector shaft holder 10 in the axial direction.

The high axial stop element 60 is adapted to being rotated until it abuts against the first rotation stop 28. The low axial stop element 50 disposed close to the high axial stop element 60 is not affected by the first rotation stop 28 but is held in position by the fact that the high axial stop element 60 cannot rotate in that direction. According to a variant, to prevent the high axial stop element 60 from rotating back, a stop screw 34 depicted in Fig. 2a is fitted to stop such rotation.

Figs. 9a-e depict schematically lateral cross-sectional views of the selector shaft holder 10 according to Fig. 1, the selector shaft 40 according to Figs.5a-c and axial stop elements 50, 60 according to Figs. 6a-d and 7a-d at various stages of an assembly procedure for constructing the selector fork configuration I according to the first embodiment.

Fig. 9a depicts schematically the selector shaft 40 and the selector shaft holder 10 in a first mutual rotation state of the shaft. In this mutual rotation state, the selector shaft 40 is inserted by its rear end through the forward aperture 12a of the hub portion 12 of the selector shaft holder 10, the low axial stop element 50 being placed in the first groove 42a and the high axial stop element 60 being placed in the second groove 42b of the first recess of the selector shaft 40.

In this mutual rotation state, the selector shaft 40 is turned 180 degrees from its final locking position depicted in Figs. 8a and 8b. In this situation the encircling rear groove 44 of the second recess of the selector shaft 40 is introduced into the continuous duct configuration 20 and is situated in the central duct portion 24.

Fig. 9b depicts schematically the selector shaft 40 in the mutual rotation state in Fig. 9a, inserted by a first axial mutual movement of the selector shaft 40 and the selector shaft holder 10 so that they are put into an engagement state such that the low axial stop element 50 placed in the first groove 42a abuts against the second upper semicircular portion 26b of the forward duct portion 26, and that the high axial stop element 60 placed in the second groove 42b abuts against the lower semicircular portion 26c of the forward duct portion 26. In this situation, the selector shaft 40 protrudes through the rear aperture 12b of the hub portion 12 of the selector shaft holder 10 so that the whole of the encircling rear groove 44 of the second recess is accessible outside the selector shaft holder 10.

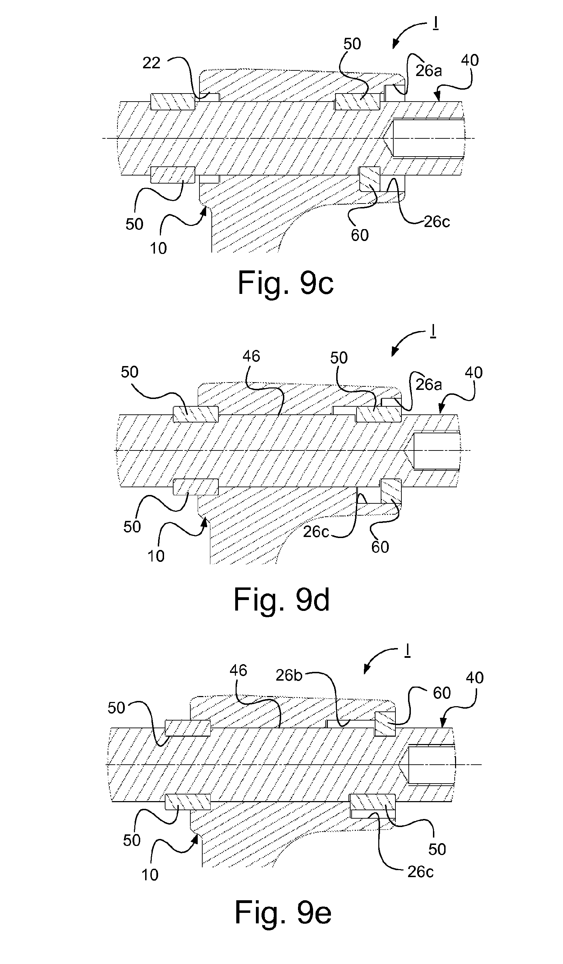

Fig. 9c depicts schematically the selector shaft 40 in the engagement state in Fig. 9b in which two low axial stop elements 50 have been placed in the encircling rear groove 44 of the second recess.

Fig. 9d depicts schematically a first step in a locking operation, involving a second axial mutual movement of the selector shaft 40 and the selector shaft holder 10 such that in this situation the two low axial stop elements 50 placed in the encircling rear groove 44 of the second recess abut against the rear duct portion 22 of the continuous duct configuration 20 of the selector shaft holder 10. In addition, in this situation the low axial stop element placed in the first groove 42a abuts against a portion of the inner surface of the second upper semicircular portion 26b of the forward duct portion 26, and the high axial stop element 60 placed in the second groove 42b abuts against a portion of the inner surface of the lower semicircular portion 26c of the forward duct portion 26.

Fig. 9e depicts schematically a second step in the locking operation, involving a second mutual rotation of the selector shaft 40 and the selector shaft holder 10 such that the shaft in the mutual axial state of the selector shaft 40 and the selector shaft holder 10 in Fig. 9d are arranged to be rotated 180 degrees so that the selector shaft 40 and the selector shaft holder 10 are put into the locking state in accordance with Figs. 8a and 8b.

In this situation, the high axial stop element 60 placed in the first groove 42a and the low axial stop element 50 placed in the second groove 42b of the first recess in the selector shaft 40 are consequently so disposed relative to the forward duct portion 26 that the selector shaft 40 is prevented from moving axially rearwards relative to the selector shaft holder 10, and the low axial stop element 50 placed in the encircling rear groove 44 of the second recess of the selector shaft 40 is so disposed relative to the rear duct portion 22 that the selector shaft 40 is prevented from moving axially forwards relative to the selector shaft holder 10.

According to an embodiment, as mentioned above, a rotation lock 34 in the form of a stop screw 34, see Fig. 2b, is fitted close to the forward duct portion so that mutual rotation of the selector shaft 40 relative to the selector shaft holder 10 is prevented. Figs. 3a and 3b show fastening holes 35 for such a stop screw.

Fig. 10a depicts schematically a perspective view of a selector shaft 140 according to another embodiment of the present invention, Fig. 10b a side view of the selector shaft 140 in Fig. 10a, and Fig. 10c a view from below of the selector shaft 140 in Fig. 10a.

The selector shaft 140 according to the second embodiment differs from the selector shaft 40 according to the first embodiment in that it only has a forward groove configuration 142 formed in the same way as the rear groove configuration 44 of the selector shaft 40 according to the first embodiment depicted in Figs. 5a-c.

The selector shaft 140 according to the second embodiment differs further in that instead of an encircling groove configuration with a first narrow groove in which a high axial stop element is placed and a second wide groove in which a low axial stop element is placed in accordance with the first embodiment, it has an integrated axial stop configuration 160 substantially corresponding to the axial stop elements according to the first embodiment. The axial stop configuration 160 consequently constitutes an axial stop element 160.

Accordingly, the selector shaft 140 according to this embodiment has a forward shaft portion 145 extending axially from a forward end 140a to the forward groove configuration 142, an intermediate shaft portion 146 extending axially from the forward groove configuration 142 to the integrated axial stop configuration 160, and a rear shaft portion 147 extending axially from the axial stop configuration 160 to a rear end of the selector shaft 140.

The rear axial portion 147 is longer than the total length of the forward shaft portion 145 and the intermediate shaft portion 146 and is intended to protrude from the rear aperture of the hub portion of the selector shaft holder. The rear shaft portion 147 has a larger diameter than the forward shaft portion 145 and the intermediate shaft portion 146, which are both of the same diameter, such that the axial stop configuration 160 constitutes a transition between the intermediate shaft portion 146 and the rear shaft portion 147.

The axial stop configuration has a low axial stop portion 160a with an axial extent corresponding to the axial extent of a low axial stop element 50 according to the first embodiment and having relative to the intermediate shaft portion 146 an elevation which corresponds to the low axial stop element 50 according to the first embodiment and which consequently extends in the circumferential direction round substantially half of the circumference of the selector shaft 140.

The low axial stop portion 160a constitutes a first step 162 or stop at the transition between the intermediate shaft portion 146 and the low axial stop portion 160a. The low axial stop portion 160a constitutes a second step 164 or stop at the transition between the axial stop portion 160a and the rear shaft portion 147.

The axial stop configuration 160 has a high axial stop portion 160b with an axial extent corresponding to the axial extent of the high axial stop element 60 according to the first embodiment and having relative to the intermediate shaft portion 146 an elevation which corresponds to the high axial stop element 60 according to the first embodiment and which consequently extends in the circumferential direction round substantially half of the circumference of the selector shaft 140.

The high axial stop portion 160b constitutes a step 166 or stop at the transition between the intermediate shaft portion 146 and the high axial stop portion 160b, which transition is situated axially along the selector shaft 140 at a location substantially in the middle of the axial extent of the low axial stop portion 160a. The high axial stop portion 160b constitutes a third step or stop 166 at the transition between the axial stop portion 160b and the rear shaft portion 147.

During mutual axial locking of the selector shaft 140 relative to the selector shaft holder, similar assembly procedures involving locking operations according to the first embodiment depicted in Figs. 9a-e are effected. In this case the selector shaft holder differs in that the forward duct portion according to the first embodiment is here disposed in the rear aperture of the hub portion of the selector shaft holder, and the rear duct portion is disposed in the forward aperture of the hub portion of the selector shaft holder.

An advantage of this solution is that it involves fewer parts in that apart from the selector shaft 140 and the selector shaft holder it needs only two axial stop elements prearranged in the forward groove.

Fig. 11 a depicts schematically a perspective view of a selector shaft 240 intended to be accommodated in the selector shaft holder in Fig. 1 according to a third embodiment of the present invention, Fig. 11b a perspective view of a high axial stop element 260 according to a second embodiment of the present invention, and Fig. 11c a perspective view of the selector shaft 240 in Fig. 11 a provided with the axial stop element 260 in Fig. 11 b.

The third embodiment differs from the first embodiment in that both the forward groove configuration 242 and the rear groove configuration 244 take the form of encircling grooves 242, 244 which run in the circumferential direction and are of the same axial extent, i.e. have the same width and are equally wide all round, which width corresponds to the wider second groove according to the first embodiment.

The third embodiment further differs from the first embodiment in that the high axial stop element 260 has not only its high semicircular shell configuration 260a with an axial extent corresponding to the high axial stop element according to the first embodiment with a width corresponding to the first substantially half as wide groove, but also a groove depth-high shell configuration 260b which is integrated with the high annular shell configuration and constitutes an axial extension of the high semicircular shell configuration.

The high axial stop element 260 disposed in one of the relatively wide groove configurations 242 results in the same function as the high axial stop element according to the first embodiment when the integrated groove depth-high shell configuration 260b fills the remaining width of the groove.

During mutual actual locking of the selector shaft 240 relative to the selector shaft holder, similar assembly procedures involving locking operations according to the first embodiment depicted in Figs. 9a-e are effected.

An advantage of this embodiment is that the recessed grooves 242, 244 of the same width are easy to achieve by machining.

In the first, second and third embodiments of the present invention, the selector shaft 40; 140; 240 is adapted to being mutually locked relative to the selector fork holder by a first axial mutual movement of the selector shaft 40; 140; 240 and the selector fork holder 10 so that the selector fork holder 10 is brought to a stop, such that the selector shaft 40; 140; 240 and the selector fork holder 10 are put into an engagement state, the selector shaft 40; 140; 240 and the selector fork holder 10 are adapted to being then brought to a second stop by a second mutual axial movement in an opposite direction to the first axial mutual movement, and the selector shaft 40; 140; 240 and the selector fork holder 10 are adapted to being put into a locking state by mutual rotation of the selector shaft 40; 140; 240 and the selector shaft holder 10. To this end, according to a variant, a second rotation stop 34 is fitted in the form of a stop screw 34 as described in relation to the first embodiment.

Fig. 12a depicts schematically a perspective view of a selector shaft holder 310 of a selector fork for accommodation of selector shafts according to a fourth embodiment, Fig. 12b a perspective view of a selector shaft 340 provided with axial stop elements 360 and intended to be accommodated in the portion in Fig. 12a according to a fourth embodiment of the present invention, and Fig. 12c a partly cutaway perspective view, as seen obliquely from above, of a portion of a selector fork configuration IV according to the fourth embodiment of the present invention in a locking state in which the selector shaft holder 310 according to Fig. 12a and the selector shaft 340 provided with axial stop elements 360 according to Fig.12b are mutually locked axially.

The selector shaft holder 310 according to the fourth embodiment of the present invention differs from the selector shaft holder 10 according to the first embodiment in the form of the continuous duct configuration 320 of the hub portion 312 of the selector shaft holder 310.

The forward aperture 310a of the hub portion 312 has a cross-section with a first semicircular portion with an inside radius substantially corresponding to the outside radius of the selector shaft 340, and a second semicircular portion with an inside radius which is larger than the inside radius of the first semicircular portion.

The first semicircular portion is arranged to run in the circumferential direction along the left inner side of the hub portion 312 from the upper portion to the lower portion of the aperture, and the second semicircular portion is arranged to run in the circumferential direction along the right inner side of the hub portion 312 from the upper portion to the lower portion of the aperture, such that the transition between the first and second hub portions constitutes an upper step 313a and a lower step 313b.

The second semicircular portion constitutes an internal first recess of the hub portion 312 running in the circumferential direction and forming a first semicircular lateral duct portion 322 of the continuous duct configuration 320 with an axial extent amounting to barely half of the axial extent of the continuous duct configuration 320.

The continuous duct configuration 320 further comprises a recess running internally in the circumferential direction and forming a second semicircular lateral duct portion 324 which has an axial extent substantially corresponding to a quarter of the first semicircular lateral duct portion 322. The second semicircular lateral duct portion 324 is arranged to run from a middle portion of the first lateral duct portion 322 in the circumferential direction along opposite sides to an opposite end of the first lateral duct portion 322, forming a duct connection between them with the same depth as the first and second lateral duct portions.

The continuous duct configuration 320 further comprises an internal recess running in the circumferential direction and forming a third lateral duct portion 326 which has an axial extent substantially corresponding to the first semicircular lateral duct portion 322. The third lateral duct portion 326 is disposed parallel with and nearer to the rear aperture 312b than the second lateral duct portion 324, such that it is arranged to run from a lower portion separately from the second lateral duct portion along the same side as the second lateral duct portion 322, a forward portion of the third lateral duct portion 326 in the upper portion is connected to a rear portion of the first lateral duct portion 322 forming a duct connection between them, and they are of the same depth.

The continuous duct configuration 320 further comprises an internal recess running in the circumferential direction and forming a fourth semicircular lateral duct portion 328 which has an axial extent substantially corresponding to a quarter of the first semicircular lateral duct portion 322. The fourth lateral duct portion 328 is disposed parallel with and nearer to the rear aperture than the first lateral duct portion 322 and is arranged to run from a lower portion separately from the third lateral duct portion 326 along the same side as the first lateral duct portion 322, the fourth lateral duct portion 328 in the upper portion is connected to a rear portion of the third lateral duct portion 326, forming a duct connection between them, and they are of the same depth.

The fourth embodiment differs from the first embodiment in that both the forward groove configuration 342 and the rear groove configuration 344 take the form of encircling grooves 342, 344 which run in the circumferential direction and have the same axial extent, i.e. they are of the same width and equally wide all round, which width substantially corresponds to the second and fourth lateral duct portions 324, 328.

The fourth embodiment further differs from previous embodiments in that only two axial stop elements 360 are needed, are of semicircular shell configuration and are both of the same size. Each axial stop element 360 has a width substantially corresponding to the respective groove 342, 344.

Consequently, one axial stop element 360 is intended to be placed in one groove 342 and the other axial stop element 360 to be placed in the other groove 344 of the selector shaft 340. The thickness of the respective axial stop elements 360 is such that when they are placed in the grooves they protrude to a height substantially corresponding to the depth of the first, second, third and fourth lateral duct portions.

One axial stop element 360 is intended to be placed in one groove on one side of the selector shaft 340 so that it runs along half of the groove, and the other axial stop element 360 is intended to be placed in the other groove on the other side of the selector shaft 340 so that it runs along half of the groove 342 on the opposite side from the axial stop element 360 placed in the other groove 344.

To prevent the respective axial stop elements from rotating in their grooves, the selector shaft 340 has according to an embodiment an axial groove 343 which connects the encircling grooves, in which case the respective axial stop elements each have an arm 361 intended to be in the axial groove when the axial stop element 360 is placed in its encircling groove.

During mutual axial locking of the selector shaft 340 relative to the selector shaft holder 310, an assembly procedure involving locking operations is effected such that the selector shaft 340 and the selector shaft holder 310 are disposed in a first mutual rotation state of the shaft, the axial stop element 360 placed in the groove 344 and intended to be inserted first through the forward aperture is so disposed that when inserted in the continuous duct configuration 320 axially it will run in the first lateral duct portion 322, and the second axial stop element 360 placed in the following groove 342 is situated on the opposite side.

In this mutual rotation state, the selector shaft 340 is adapted to being subjected to a first axial mutual movement of the selector shaft 340 and the selector shaft holder 310 so that they are put into an engagement state such that the leading axial stop element 360 placed in the first groove 344 inserted abuts against the edge/step of the first lateral duct portion 322 which constitutes its end. In this situation the axial stop element 360 disposed on the opposite side is still outside the aperture of the hub portion 312.

In this engagement state, a step in a locking operation involving a first mutual rotation of the selector shaft 340 and the selector shaft holder 310 is effected such that the selector shaft 340 in the mutual axial state of the selector shaft 340 and the selector shaft holder 310 is adapted to being rotated 180 degrees so that the leading axial stop element 360 runs in the circumferential direction into the third lateral duct portion 326 situated on the opposite side and connected to the first lateral duct portion.

In this situation, a second step in a locking operation involving a second axial mutual movement of the selector shaft 340 and the selector shaft holder 310 is effected such that in this situation the leading axial stop element 360 is arranged to run axially in the third lateral duct portion 326 to a second engagement state, and the leading axial stop element 360 placed in the first groove inserted abuts against the edge/step of the third lateral duct portion 326, which constitutes its end.

In this second engagement state, a final step in a locking operation involving a second mutual rotation of the selector shaft 340 and the selector shaft holder 310 is effected such that the shaft in the mutual axial state of the selector shaft 340 and the selector shaft holder 310 is adapted to being rotated 180 degrees so that the leading axial stop element 360 runs in the circumferential direction into the fourth lateral duct portion 328 situated on the opposite side and connected to the third lateral duct portion 326, and at the same time the following axial stop element 360 runs in the circumferential direction into the second lateral duct portion 324 situated on the opposite side of the first lateral duct portion 322. The selector shaft 340 is thus mutually locked relative to the selector shaft holder 310 in the axial direction.

To achieve rotational locking, it is possible according to an embodiment for a stop screw to be fitted to prevent mutual rotation.

In the fourth embodiment of the present invention, the selector shaft 340 is adapted to being mutually locked relative to the selector fork holder by a first axial mutual movement of the selector shaft 340 and the selector shaft holder 310 so that the selector shaft holder 310 is brought to a stop, such that the selector shaft 340 and the selector shaft holder 310 are put into an engagement state by a first mutual rotation of the selector shaft 340 and the selector shaft holder 310, the selector shaft 340 and the selector shaft holder 310 are adapted to being then brought to a second stop by a second mutual axial movement in the same direction as the first axial mutual movement, and the selector shaft 340 and the selector shaft holder 310 are adapted to being put into a locking state by a second mutual rotation of the selector shaft 340 and the selector shaft holder 310. To this end, according to a variant, a second rotation stop 34 is fitted in the form of a stop screw 34 as described in relation to the first embodiment.

An advantage of this embodiment is that the recessed grooves 342, 344, which are both of the same width, are easy to achieve by machining. A further advantage of this embodiment is that only two axial stop elements 360 are needed, hence fewer components. A further advantage is that fitting the selector shaft 340 need not involve having to pass it through the continuous duct configuration 320 so that the leading groove is made accessible for application of axial stop elements 360. This makes it possible for both of the axial stop elements 360 in the respective grooves 342, 344 to be placed in them before the locking operation commences, and they need not be applied during the same operation. Consequently, both of the axial stop elements might be integrated with the selector shaft 340, obviating any grooves, or be permanently fastened in the respective grooves 342, 344.

Various embodiments for locking in axial directions and also rotary directions of selector shafts in selector shaft holders of selector fork configurations are described above. The invention may with advantage be used when fitting any suitable shaft in an element which comprises a fastening lug for axial locking and also rotational locking.

The above description of preferred embodiments of the present invention is provided for illustrative and descriptive purposes. It is not intended to be exhaustive or to limit the invention to the variants described. Many modifications and variations will of course be obvious to specialists. The embodiments were chosen and described in order best to explain the principles of the invention and their practical applications and hence to make it possible for one skilled in the art to understand the invention for different embodiments and with the various modifications appropriate to the intended use.

## Claims

1. A fastening device for fastening, in relation to a shaft, an element comprising a fastening lug (10, 310) through which the shaft is intended to run, which device comprises a locking configuration for mutually locking the shaft (40; 140; 240; 340) relative to the fastening lug (10; 310) in the axial direction, **characterised by** locking elements (30, 31, 33, 42a, 42b, 44, 50, 60; 142, 162, 166; 242, 244, 262, 266; 322, 328, 342, 344, 360) adapted, in a first mutual rotation state of the shaft (40; 140; 240; 340) and the fastening lug, to being put into an engagement state by a first axial mutual movement of the shaft (40; 140; 240; 340) and the fastening lug, and to be being put into a locking state after a locking operation which involves a second axial mutual movement and a mutual rotation of the shaft (40; 140; 240; 340) and the fastening lug.

2. A fastening device according to claim 1, whereby said second axial mutual movement of the shaft (40; 140; 240) and the fastening lug (10; 310) is arranged to take place before said mutual rotation of the shaft and the fastening lug (10).

3. A fastening device according to claim 1, whereby said second axial mutual movement of the shaft (340) and the fastening lug (310) is arranged to take place after a first mutual rotation of the shaft (340) and the fastening lug (310) to reach said first mutual rotation state.

4. A fastening device according to any one of claims 1-3, whereby said second mutual rotation of the shaft (40; 140; 240; 340) and the fastening lug (10; 310) is substantially 180 degrees.

5. A fastening device according to any one of claims 1-4, whereby said locking elements comprise axial stop elements (50, 60; 160; 260; 360) and also recesses (42a, 42b, 44; 142, 144; 242, 244; 342, 344) provided inside the fastening lug and mutually configured to make said states possible.

6. A fastening device according to claim 5, whereby said axial stop elements (50, 60; 160; 360) are adapted to being attached to the shaft (40; 140; 240; 340) such that locking elements comprise shaft portions with grooves (42a, 42b,44;142,242,244,342,344).

7. A fastening device according to claim 5, in which at least one axial stop element (160) is comprised of shaft portions (160a, 160b).

8. A fastening device according to any one of claims 1-8, whereby said locking elements incorporate at least one rotary lock (34) associated with the fastening lug (10; 310) for mutual locking of the shaft (40; 140; 240; 340) relative to the fastening lug (10; 310) in rotary directions.

9. A fastening device according to any one of claims 1-7, whereby said elements consists of a selector fork (1) and said shaft take the form of selector shafts (40; 140; 240; 340) for selector fork configurations. (I; IV).

10. A motor vehicle comprising a fastening device according to any one of claims 1-9.
